# EUROPEAN PATENT APPLICATION

(11) **EP 3 042 839 A1**
(43) Date of publication of application: **13.07.2016**
(21) Application number: 16150393.3
(22) Date of filing: 07.01.2016
(51) Int. Cl.: B62M 25/08, B62K 23/02

(54) **CONTACT OPERATING DEVICE FOR BICYCLE**

(30) Priority: 06.01.2015 TW 104200127
(71) Applicant: J.D Components Co., Ltd., Shou Shui Hsiang, Chang Hua Hsien (TW)
(72) Inventor: Yang, Yao-Ming, Chang Hua Hsien (TW); Huang, Chun-Wei, 522 Changhua County (TW)
(74) Representative: Becker Kurig Straus

(57) **Abstract**

A contact operating device (10) for a bicycle includes a mount (20) and two touch sensors (30). The mount (20) is fixed to a handle bar (12) or a brake lever base (16) of the bicycle and has a touch surface (21) and two touch-site indicating portions (22) located on the touch surface (21). The touch sensors (30) are installed on the touch surface (21) of the mount (20) and correspond to the touch-site indicating portions (22) of the mount (20) for detecting a touch motion from a cyclist of the bicycle and sending a sensing signal to a controller, so that the controller performs a desired operation according to the received sensing signal.

## Description

### BACKGROUND OF THE INVENTION

### 1. Technical Field

The present invention relates to bicycles, and more particularly to a contact operating device for a bicycle.

### 2. Description of Related Art

In a bicycle, controls for functions such as gear shifting, seat-angle adjustment and seat-tube adjustment are traditionally integrated in a control panel for a cyclist to operate and realize the corresponding functions.

There are situations where a cyclist needs to repeatedly operate the same button. For example, when cycling along an undulate rode, a cyclist may frequently shift gears for effort saving riding. However, since the buttons are closely arranged in the control panel, it is difficult for a cyclist to ride and operate the right button accurately and promptly. Once an accident, improper operation is made, the cyclist is under the risk of accident.

### SUMMARY OF THE INVENTION

The primary objective of the present invention is to provide a contact operating device for a bicycle, which enables a cyclist to perform operations accurately and promptly while riding the bicycle.

For achieving the foregoing objective, the disclosed contact operating device comprises a mount and at least two touch sensors. The mount has a touch surface and two touch-site indicating portions on the touch surface. Each of the touch sensors is installed on the touch surface of the mount and corresponds to the touch-site indicating portion of the mount for detecting a touch motion and sending a sensing signal to a controller, so that the controller performs a desired operation according to the received sensing signal.

Preferably, the touch-site indicating portions of the mount are different from the touch surface of the mount in terms of shape, height or friction, so that when a cyclist riding the bicycle places his/her thumb on the touch-site indicating portion of the mount, he/she can clearly identify where the thumb is, thereby facilitating further operation.

Preferably, the contact operating device further comprises a power switch and the mount further has a power-source-site indicating portion on the touch surface. The power switch is installed on the touch surface of the mount corresponding to the power-source-site indicating portion of the mount and is electrically connected to the two touch sensors for switching the touch sensor on or off. In addition, the power-source-site indicating portion of the mount is different from the touch surface of the mount and from the touch-site indicating portions of the mount in terms of shape, height or friction, so that when a cyclist riding the bicycle places his/her thumb on the power-source-site indicating portion of the mount, he/she can clearly identify where the thumb is, thereby facilitating further operation.

Preferably, the contact operating device further comprises a flexible display and a physiology sensor. The flexible display is connected to each of the touch sensors for displaying sensing results from the touch sensors. The physiology sensor is connected to the flexible display for monitoring the cyclist's physiological state, and the flexible display displays the sensing results from the physiology sensor.

### BRIEF DESCRIPTION OF THE DRAWINGS

FIG. 1 is a plane view of a first embodiment of the present invention.
FIG. 2 is a plane view of a second embodiment of the present invention.
FIG. 3 is a plane view of a third embodiment of the present invention.
FIG. 4 is a perspective view of a fourth embodiment of the present invention, showing the flexible display inactivated.
FIG. 5 is a perspective view of the fourth embodiment of the present invention, showing the flexible display activated.

### DETAILED DESCRIPTION OF THE INVENTION

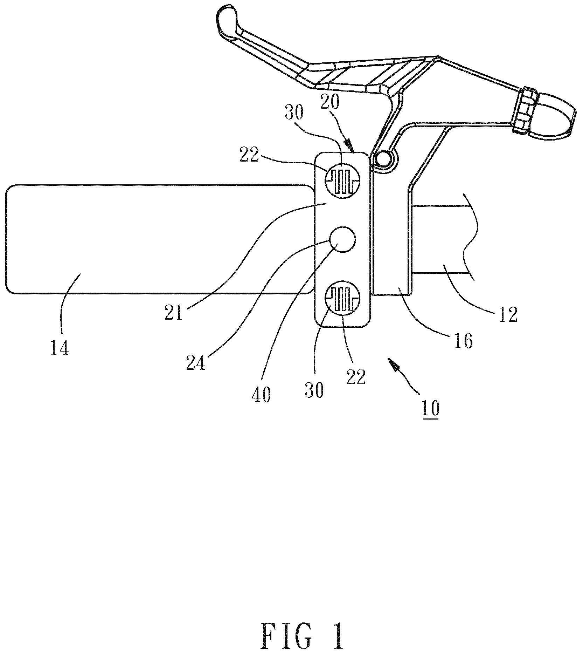

Referring to FIG. 1, according to the first embodiment of the present invention, a contact operating device 10 for a bicycle comprises a mount 20, two touch sensors 30, and a power switch 40.

The mount 20 of the present embodiment is fixed to a handle bar 12 and located between and adjacent to a handle cover 14 and a brake lever base 16. The mount 20 has a touch surface 21, two touch-site indicating portions 22 on the touch surface 21 and a power-source-site indicating portion 24 on the touch surface 21. Therein, the touch-site indicating portions 22 are different from the touch surface 21 in terms of shape, height or friction. For example, the touch-site indicating portion 22 may have a concave or have a plurality of frictional beads on its surface. The purpose is to allow a cyclist riding the bicycle to use his/her thumb to clearly locate the touch-site indicating portion 22. The power-source-site indicating portion 24 is different from the touch surface 21 and the touch-site indicating portions 22 in terms of shape, height or friction. In one instance, the power-source-site indicating portion 24 is raised, so that the cyclist's thumb can clearly feel where the power-source-site indicating portion 24 is.

The touch sensors 30 are embedded in the touch surface 21 of the mount 20 and correspond to the touch-site indicating portions 22 of the mount 20 for detecting a touch motion and sending a sensing signal.

The power switch 40 is installed on the touch surface 21 of the mount 20 corresponding to the power-source-site indicating portion 24 of the mount 20 and is electrically connected to the touch sensors 30. In the present embodiment, the power switch 40 is preferably but not limited to a light-operated switch, which employs a photoresistor installed therein to detect ambient light variations and turns on or off the touch sensors 30 accordingly.

In practical use, the cyclist may first position a thumb on the power-source-site indicating portion 24 of the mount 20 to cover the power switch 40, so that the power switch 40 activates the two touch sensors 30 simultaneously. After said activation, since the power-source-site indicating portion 24 of the mount 20 is different from the touch surface 21 and the touch-site indicating portion 22 in terms of shape, height or friction, the cyclist at this time can clearly feel where his/her thumb is, and then according to his/her riding needs move his/her thumb forward or backward until it reaches one of the touch-site indicating portions 22 of the mount 20. As a result, the touch sensor 30 located in that touch-site indicating portion 22 is triggered. The triggered touch sensor 30 then sends a sensing signal to a controller (not shown). Upon reception of the signal, the controller performs corresponding functional operation, such as gear shifting or seat-tube adjustment. Once the desired operation is done, the cyclist may move his/her thumb back to the power-source-site indicating portion 24 of the mount 20 to make the power switch 40 turn off the touch sensor 30. In this manner, the touch sensor 30 remains off when not in use and thereby preventing unnecessary power consumption.

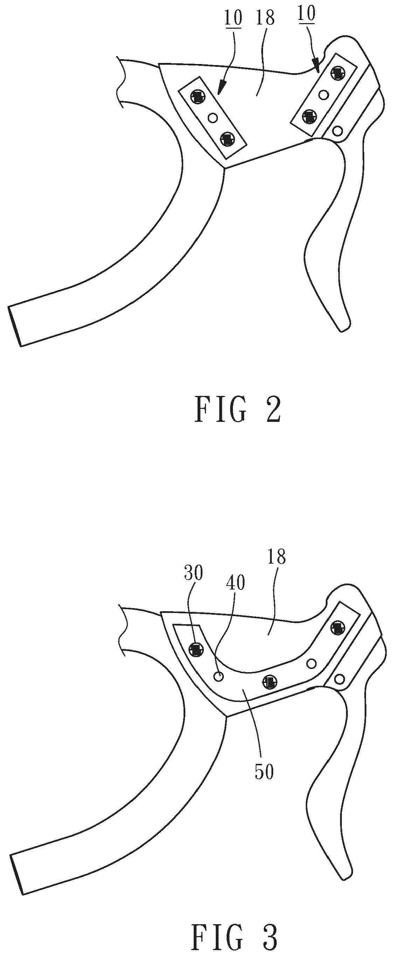

It is to be understood that the numbers, locations and configurations of the disclosed components may be varied from those as described above. For example, two said contact operating devices 10 are installed on the same brake lever base 18 in FIG. 2. The two contact operating devices 10 may each control a different function. In addition, as shown in FIG. 3, the mount 50 may have a shape that mates the inner periphery of the brake lever base 18. With an increased length of the mount 50, the numbers of the touch sensors 30 and the power switches 40 may be correspondingly increased. For an instance shown in FIG. 3, three aforesaid touch sensors 30 and two aforesaid power switches 40 are provided. Each said power switch 40 is located between two adjacent said touch sensors 30. The individual power switches 40 are configured to activate the touch sensors 30 connected thereto, thereby allowing the touch sensors 30 to be later triggered for the associated functions.

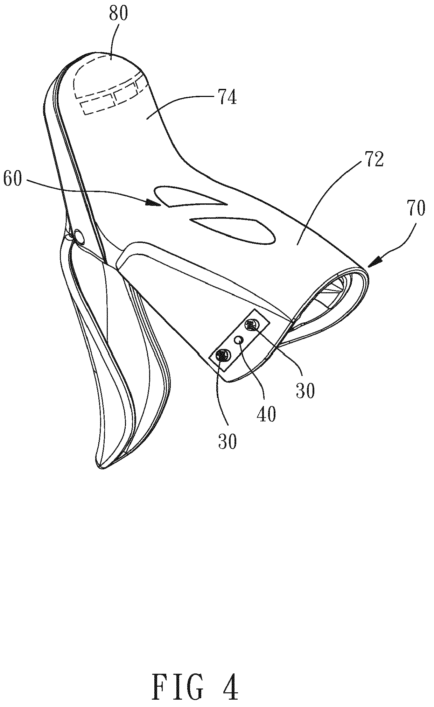

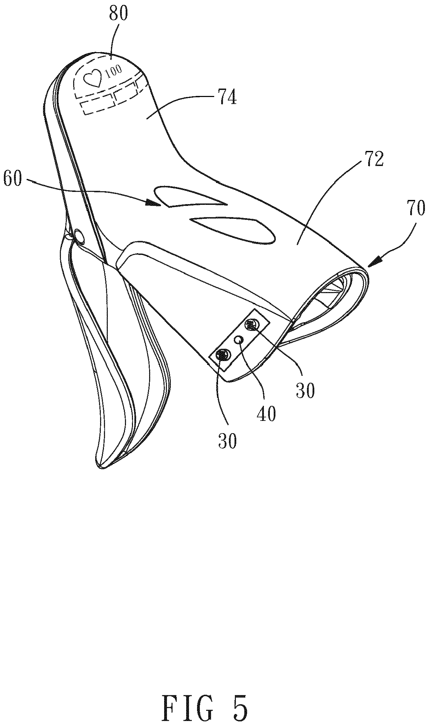

Now referring to FIG. 4, in the depicted embodiment, the disclosed contact operating device 10 comprises a physiology sensor 60. The physiology sensor 60 is attached to a grip portion 72 of the handle cover 70 and is connected to the power switch 40. When a cyclist uses his/her thumb to cover the power switch 40, the power switch 40 activates the physiology sensor 60 in addition to the touch sensors 30, so that the physiology sensor 60 monitors the cyclist's physiological state (e.g. his/her heart rate) during his/her riding in a real-time manner. Moreover, the disclosed contact operating device 10 further comprises a flexible display 80. The flexible display 80 is inlaid at a raised portion 74 of the handle cover 70 and is connected to the power switch 40. When not activated, the flexible display 80 is apparently integrated with the handle cover 70 as a whole and visually vanished (as represented in FIG. 4), so as to exist as a concealed component. When activated by the power switch 40, the flexible display 80 displays information (as shown in FIG. 5), such as the bicycle's speed, the trip distance, the battery life and so on, and also displays the functional operations performed after the touch sensors 30 are triggered (e.g. gear shifting or seat-tube adjustment) and the sensing results from the physiology sensor 60 (e.g. his/her heart rate).

To sum up, the disclosed contact operating device 10 enables a cyclist to trigger the touch sensors 30 accurately and promptly by using the specially designed mount 20, 50, and ensures that the touch sensors 30 are only activated when the cyclist needs them by using the power switch 40 that is controlled by light variations, thereby preventing unnecessary power consumption and in turn maximizing the use life of the device. Also importantly, it uses the physiology sensor 60 to monitor the cyclist's physiological state in a real-time manner and displays information on riding and on sensing through the flexible display 80, thereby optimizing the cyclist's riding.

## Claims

1. A contact operating device (10) for a bicycle, the contact operating device (10) comprising:
a mount (20, 50), having a touch surface (21) and at least two touch-site indicating portions (22) on the touch surface (21); and
at least two touch sensors (30), installed on the touch surface (21) of the mount (20, 50) and corresponding to the touch-site indicating portions (22) of the mount (20, 50) for detecting a touch motion and sending a sensing signal.

2. The contact operating device (10) of claim 1, wherein the touch-site indicating portions (22) of the mount (20) are different from the touch surface (21) of the mount (20) in terms of shape, height or friction.

3. The contact operating device (10) of claim 1, further comprising a power switch (40), wherein the mount (20) further has a power-source-site indicating portion (24) on the touch surface (21), and the power switch (40) is installed on the touch surface (21) of the mount (20) corresponding to the power-source-site indicating portion (24) of the mount (20) and is electrically connected to the two touch sensors (30).

4. The contact operating device (10) of claim 3, wherein the power-source-site indicating portion (24) of the mount (20) is different from the touch surface (21) of the mount (20) and different from the touch-site indicating portions (22) of the mount (20) in terms of shape, height or friction.

5. The contact operating device (10) of claim 1, further comprising a handle cover (70) and a flexible display (80), wherein the flexible display (80) is inlaid in the handle cover (70) and connected to each of the touch sensors (30) for displaying sensing results from the touch sensors (30).

6. The contact operating device (10) of claim 5, further comprising a power switch (40), wherein the mount (50) further has a power-source-site indicating portion (24) on the touch surface (21), and the power switch (40) is installed on the touch surface (21) of the mount (20) corresponding to the power-source-site indicating portion (24) of the mount (20) and is electrically connected to the two touch sensors (30) and the flexible display (80).

7. The contact operating device (10) of claim 5, further comprising a physiology sensor (60), wherein the physiology sensor (60) is installed on the handle cover (70) and is connected to the flexible display (80) for monitoring a physiological state of a cyclist riding the bicycle, so that the flexible display (80) displays sensing results from the physiology sensor (60).

8. The contact operating device (10) of claim 7, further comprising a power switch (40), wherein the mount (50) further has a power-source-site indicating portion (24) on the touch surface (21), and the power switch (40) is installed on the touch surface (21) of the mount (50) corresponding to the power-source-site indicating portion (24) of the mount (50) and is electrically connected to the two touch sensors (30), the flexible display (80) and the physiology sensor (60).
